Europäisches Patentamt

European Patent Office

Office européen des brevets

(11) Veröffentlichungsnummer: **0 353 431 B1**

(12) **EUROPÄISCHE PATENTSCHRIFT**

(45) Veröffentlichungstag der Patentschrift: **15.09.93**

(21) Anmeldenummer: **89110746.8**

(22) Anmeldetag: **14.06.89**

(51) Int. Cl.⁵: **A01N 59/00**, A01C 1/02, A01C 1/06

(54) Verfahren zur Verbesserung der Keimfähigkeit und Keimschnelligkeit von Pflanzensamen.

(30) Priorität: **02.08.88 DE 3826240**

(43) Veröffentlichungstag der Anmeldung: **07.02.90 Patentblatt 90/06**

(45) Bekanntmachung des Hinweises auf die Patenterteilung: **15.09.93 Patentblatt 93/37**

(84) Benannte Vertragsstaaten: **BE DE ES FR GB IT NL**

(56) Entgegenhaltungen: DE-C- 869 807 GB-A- 549 571

(73) Patentinhaber: **Degussa Aktiengesellschaft Weissfrauenstrasse 9 D-60311 Frankturt(DE)**

(72) Erfinder: **Ferch, Horst, Dr. Justus-Liebig-Strasse 13 D-6454 Bruchköbel(DE)** Erfinder: **Mathias, Johann., Dr. Am Binnsack 8 D-8756 Kahl(DE)** Erfinder: **Kahnt, Günter, Prof.-Dr. Schurwaldstrasse 5/1 D-7024 Filderstadt 1(DE)** Erfinder: **Küpfer, Christian Talstrasse 57 D-7302 Ostfildern 3(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Verbesserung der Keimfähigkeit und Keimschnelligkeit von Pflanzensamen.

Nach der Aussaat von Pflanzensamen wurde häufig festgestellt, daß durch starke Regenfälle die Oberfläche der Böden stark verschlämmt.

Diese Verschlämmung behindert oder verhindert das Durchstoßen der Bodenoberfläche durch zum Beispiel Sojabohnenkeimlinge.

Gegenstand der Erfindung ist ein Verfahren zur Verbesserung der Keimfähigkeit und der Keimschnelligkeit von Pflanzensamen, welches dadurch gekennzeichnet ist, daß man Pflanzensamen mit synthetischer, hydrophiler Kieselsäure, insbesondere mit auf pyrogenem Wege hergestellter Kieselsäure, umhüllt.

Als synthetische Kieselsäure kann man bei dem erfindungsgemäßen Verfahren Kieselsäuren einsetzen, die in Winnacker-Küchler, Chemische Technologie, Band 3, Anorganische Technologie II, 4. Auflage, Carl Hauser Verlag München, Wien 1983, Seite 75 bis 90 beschrieben werden.

Von besonderer Bedeutung sind pyrogene Kieselsäuren, die auf dem Wege der Flammenhydrolyse hergestellt wurden, sowie Fällungskieselsäuren.

Die Fällungskieselsäuren können unvermahlen oder dampfstrahlvermahlen bzw. sprühgetrocknet oder sprühgetrocknet und vermahlen eingesetzt werden.

Das erfindungsgemäße Verfahren kann bei allen Pflanzensorten angewandt werden, deren Samen für den Anbau benutzt werden. Die Applikationsmenge kann 10 bis 40 g/kg Samen betragen.

Insbesondere kann eine Anwendung auf Maiskörner, Sojabohnen und Lupinensamen erfolgen.

Vorteilhafterweise wird durch die Umhüllung der Pflanzensamen neben der Keimschnelligkeit teilweise auch die Keimfähigkeit erhöht. Dies kann besonders bei hartschaligen Lupinen erzielt werden.

Unter Keimfähigkeit wird die Fähigkeit verstanden, unter Laborbedingungen eine normal entwickelte Keimpflanze hervorzubringen.

Die Prüfung der Keimfähigkeit erfolgte nach den Internationalen Vorschriften für Saatgut (1976) Seed Sci. and Technology 4. 357 - 409. Geprüft wurden jeweils 4 x 100 Samen.

Unter Keimschnelligkeit wird die mittlere Trieblänge nach 5 Tagen in Zentimeter verstanden.

Bei Sojabohnen wird die Jugendentwicklung beschleunigt. Dadurch wird eine allgemeine Entwicklungsbeschleunigung erzielt sowie ein Mehrertrag möglich. Ein besonderer Vorteil ist der höhere Reifegrad.

Bei Mais wird eine Wachstumsbeschleunigung in der Jugendphase erzielt. In den Kombinationen frühe Sorte/späte Saat und späte Sorte/frühe Saat erhält man erhöhte Kornerträge und einen höheren Reifegrad.

Überraschenderweise erhält man dieselben Ergebnisse, wenn man bei der Anwendung von Fungiziden 50 % des Fungizides durch eine pyrogen hergestellte Kieselsäure ersetzt, wie wenn man ausschließlich das Fungizid einsetzt.

Durch die Umhüllung der Pflanzensamen mit synthetischer Kieselsäure kann die Wasseraufnahme der Pflanzensamen in trockenen Boden verbessert werden.

Beispiele

In durchgeführten Keimversuchen wurde getestet, inwieweit Kieselsäure die Wasseraufnahme von Samen beeinflussen kann bzw. ob auch eine fungizide Wirkung ähnlich der von synthetischen Fungiziden besteht. Vorab wurde ein Modellversuch angelegt, wobei Ackerbohnen-, Sojabohnen-und Maissamen mit Aerosil 200 umhüllt und anschließend einer wassergesättigten Atmosphäre ausgesetzt wurden. Der Verlauf der Wasseraufnahme wurde dann gravimetrisch bestimmt. Es zeigte sich, daß Aerosil 200 bei hoher Luftfeuchte (um 100 %) die Wasseraufnahme der Samen geringfügig (um ca. 10 %) vermindert. Nach 20 Tagen hatte sich auf den Samen aller Varianten Schimmel gebildet. Um die Wirkung der Verschimmelung zu bestimmen, wurden die Samen einer Keimprüfung unterzogen. Sie ergab, daß bei aerosilbehandelten Mais- und vor allem Sojabohnensamen die Keimfähigkeit wesentlich weniger gelitten hatte (s. Tabelle 1).

Der Vorteil des Einsatzes von synthetischer Kieselsäure wird besonders deutlich, wenn die eingesetzte Samenqualität geringer ist.

Die Keimversuche wurden folgendermaßen variiert:

Es wurden

1. verschiedene Pflanzenarten ausgesät (Ackerbohnen, Sojabohnen, Mais, Lupinen, sowie verschiedene Sorten derselben,

2. schalenverletzte und gesunde Sojabohnensamen verwendet,

3. kieselsäurebehandelte (Aerosil 200, Aerosil R 972, Sipernat 22 LS) mit unbehandelten Varianten verglichen,

4. die Kieselsäuremenge pro Same variiert,

5. die Keimsubstratfeuchte modifiziert (7, 10, 15 % Wassergehalt des Sand-Keimbettes und 30 bzw. 70 % nutzbare Wasserkapazität des Lehmbodens),

6. die Temperatur variiert (20 °C bzw. 8/12 °C Wechseltemperatur),

7. verschiedene Keimsubstrate verwendet (Sand/Lehmboden).

Unter optimalen Temperaturbedingungen, also bei 20 °C Keimtemperatur, zeigte sich bei Mais und Sojabohnen eine erhöhte Keimschnelligkeit mit steigender Aerosilmenge pro Samen (bestimmt als Anzahl der pro Zeiteinheit gekeimten Samen). Die Anzahl gekeimter Samen (Keimfähigkeit) hingegen wurde nicht erhöht, sondern mit steigender Aerosilmenge tendenziell erniedrigt (Tabelle 2). Bei Mais ergab sich mit zunehmender Sandfeuchte bei den behandelten Varianten eine höhere Keimschnelligkeit als bei den unbehandelten, Sojabohnen hingegen reagierten auf trockene bzw. auf mäßig feuchte Bedingungen (30 % nWK des Bodens und 7 bzw. 10 % Wassergehalt des Sandes) mit erhöhter Keimschnelligkeit bei Aerosil 200-Anwendung, unter feuchten Bedingungen war sie vermindert. In einem weiteren Keimversuch mit Sojabohnen wurde statt Aerosil 200 die annähernd pH-neutrale, gefällte Kieselsäure Sipernat 22 LS verwendet.

Auch in diesem Fall ergab sich bei tendenziell verminderter Keimfähigkeit eine größere Trieblänge der Keimlinge.

Sojabohnen mit Verletzungen an der Samenschale keimten bei Anwendung von Aerosil 200 um 3 % schlechter. Ihre Keimschnelligkeit, gemessen als Trieblänge am 5. Tag nach der Saat, war jedoch höher. Umgekehrte Verhältnisse lagen bei Anwendung des hydrophoben Aerosils R 972 vor. Die Keimung erfolgte jedoch langsamer (Tabelle 5).

Die Keimversuche mit Mais und Sojabohnen in Sand und Boden unter suboptimalen Temperaturbedingungen (8/12 °C) zur Prüfung des fungiziden Effektes von Aerosil 200 ergeben, daß bei der Kombination von Aerosil mit üblichen Beizmitteln bei Mais eine Verbesserung der Keimschnelligkeit erzielt werden konnte.

Die quellungsbeschleunigende Wirkung von hydrophilem Aerosil könnte auch bei ausgeprägter Hartschaligkeit von Samen genutzt werden. Eine Lupinensorte mit mittlerer Hartschaligkeit reagierte nur unter trockenen Bedingungen mit geringfügig erhöhter Keimschnelligkeit (d. h., größerer Trieblänge). Eine zweite, ausgesprochen hartschalige Lupinensorte hingegen entwickelte sich mit Aerosil 200 schneller, ohne daß die Keimfähigkeit insgesamt verändert wurde (Tabelle 6).

Die Zusammenfassung der Wirkung der synthetischen Kieselsäuren auf die Samenkeimung läßt folgende Schlüsse zu:

1. Aerosil 200 erhöht die Keimfähigkeit von Samen nicht, wenn die Keimfähigkeit lt. Prüfungsbericht bei > 90 % liegt, wohl aber bei Samen minderer Qualität (Tabelle 1).

2. Bei Mais, Sojabohnen, Lupinen wird die Keimung beschleunigt.

3. Die keimungsbeschleunigende Wirkung tritt bei trockenem Keimsubstrat (Boden, Sand) stärker hervor als bei feuchtem.

4. Eine fungizide Wirkung von Aerosil 200 gegen den Befall mit Bodenpilzen tritt bei Verwendung von Sand und Lehmboden mit <1,5 % Humusgehalt nicht auf.

Feldversuche

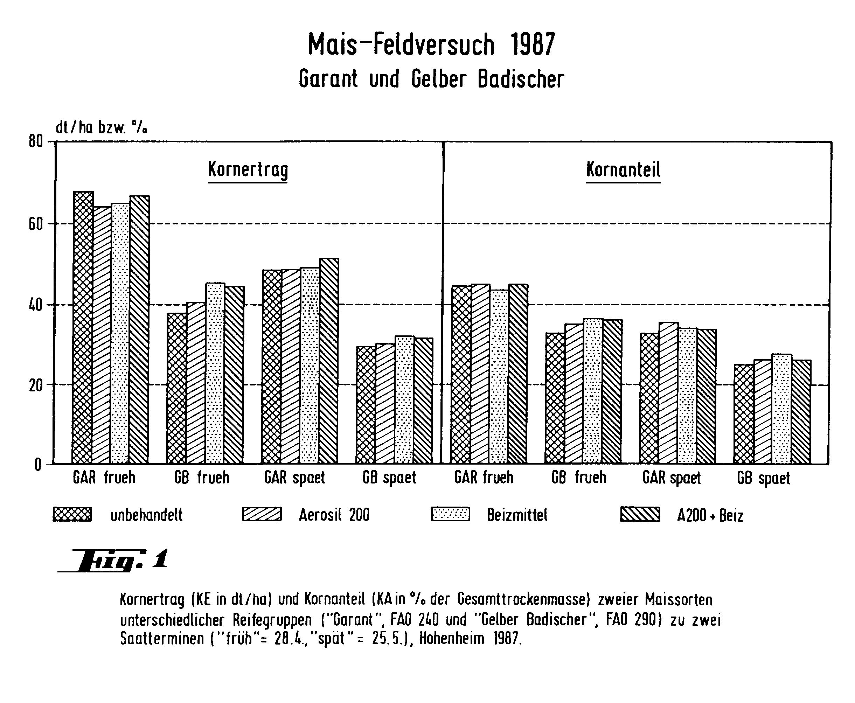

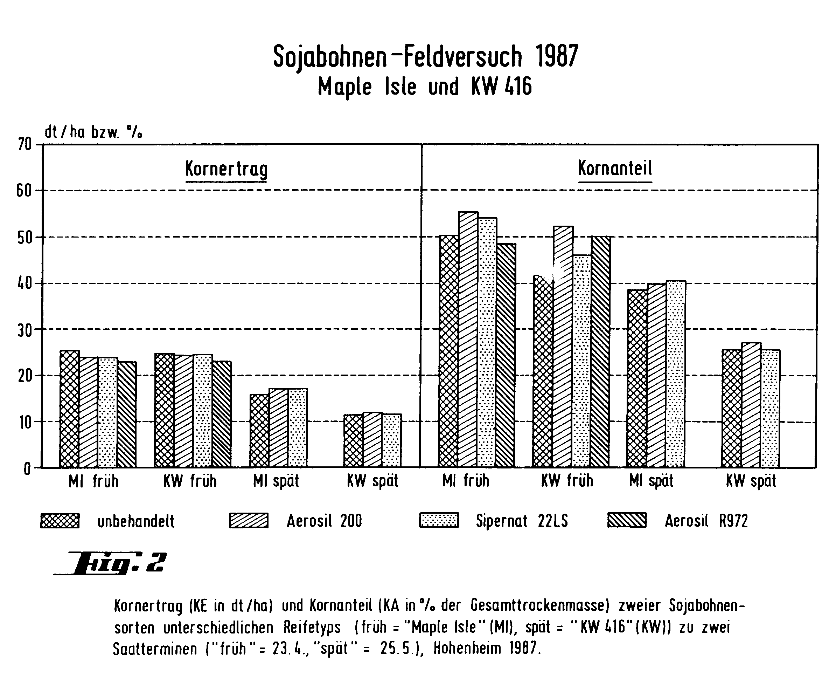

In einem Feldversuch wird bei Mais mit einem früheren und einem späteren Saattermin Aerosilbehandlung, Normalbeizung mit Fungiziden oder die Kombination beider auf Feldaufgang geprüft. Bei Sojabohnen wird bei 3 Saatterminen geprüft, ob mit Aerosil 200, Sipernat 22 LS und R 972 behandelte Samen rascher oder mit höherer Pflanzenzahl keimen. Die Zahl der aufgelaufenen Pflanzen werden zu bestimmten Zeitpunkten ausgezählt und es werden die Erträge und Ertragskomponenten ermittelt (Abb. 1 und Abb. 2).

Tabelle 1

Keimung Aerosil 200-behandelter (A) und unbehandelter (O) Mais-, Sojabohnen- und Ackerbohnensamen nach Schimmelbildung unter feuchtwarmen Bedingungen (100 % Luftfeuchte und 20 °C)

| Kulturart<br>Behandlung | Ackerbohnen | | Sojabohnen | | Mais | |
|---|---|---|---|---|---|---|
| | O | A | O | A | O | A |
| Keimfähigkeit (KF) in % nach 5 Tagen | 86 | 80 | 11 | 37 | 14 | 16 |
| Trieblänge (TL) in cm nach 5 Tagen | 4,9 | 5,3 | 5,8 | 6,9 | 7,5 | 8,3 |

Tabelle 2

Einfluß steigender Aerosil 200-Mengen (0, 1/2 A, 1 A, 1 A = 0,0025 g Aerosil 200/Samen) auf die Keimung von Mais-, Sojabohnen- und Ackerbohnensamen unter optimalen Temperaturbedingungen (20 °C) in Sand

| | Ackerbohnen | | | Sojabohnen | | | Mais | | |
|---|---|---|---|---|---|---|---|---|---|
| | O | 1/2A | 1A | O | 1/2A | 1A | O | 1/2A | 1A |
| KF % | 97,5 | 93,0 | 96,0 | 92,5 | 97,0 | 94,0 | 97,0 | 94,5 | 92,0 |
| TL cm | 6,1 | 6,0 | 5,8 | 6,2 | 7,2 | 7,4 | 3,6 | 4,3 | 4,8 |

4

Tabelle 3

Einfluß von Aerosil 200-Behandlung (1 A) auf die Keimung
von Mais- und Sojabohnensamen bei verschiedenen
Feuchtigkeitsstufen des Keimbettes (7,10, 15 %
Sandfeuchte) unter optimalen Temperaturbedingungen (20 °C)

| Kulturart | Sojabohnen | | | | | | Mais | | | | | |
|---|---|---|---|---|---|---|---|---|---|---|---|---|
| S.-Feuchte | 7 % | | 10 % | | 15 % | | 7 % | | 10 % | | 15 % | |
| Behandlung | O | 1 A | O | 1 A | O | 1 A | O | 1 A | O | 1 A | O | 1 A |
| KF % | 96 | 94 | 97 | 87 | 99 | 77 | 92 | 92 | 91 | 96 | 95 | 80 |
| TL cm | 4,5 | 5,5 | 4,7 | 5,2 | 5,5 | 5,0 | 4,5 | 4,9 | 4,8 | 5,2 | 4,5 | 5,5 |

Tabelle 4

Einfluß von Sipernat 22 LS (0,001 g/Samen) auf die Keimung
von Sojabohnen bei verschiedenen Feuchtigkeitsstufen unter
optimalen Temperaturbedingungen (20 °C) in Sand

| Sandfeuchte | 7 % | | 10 % | | 15 % | |
|---|---|---|---|---|---|---|
| Sipernataufwand | 0 g | 0,001 g | 0 g | 0,001 g | 0 g | 0,001 g |
| Keimfähigkeit in % nach 5 Tagen | 88 | 79 | 91 | 86 | 93 | 85 |
| Trieblänge in cm nach 5 Tagen | 2,0 | 2,2 | 4,5 | 5,9 | 4,8 | 5,3 |

Tabelle 5

Einfluß von hydrophilem und hydrophobem Aerosil auf die Keimung von Sojabohnen bei 10 % Sandfeuchte und 20 °C Keimtemperatur

| Behandlung | unbehandelt | Aerosil 200 (hydrophil) | Aerosil R 972 (hydrophob) |
|---|---|---|---|
| Keimfähigkeit in % nach 5 Tagen | 95 | 92 | 97 |
| Trieblänge in cm nach 5 Tagen | 4,2 | 6,4 | 3,0 |

Tabelle 6

Einfluß von Aerosil 200 bei verschiedenen Feuchtigkeitsstufen auf die Keimung von Lupinen (L.luteus) mit mittlerer ("Stamm 4") und ausgeprägter ("Stamm 2") Hartschaligkeit unter optimalen Temperaturbedingungen (20 °C) in Sand

| | "Stamm 4" | | | | | "Stamm 2" | |
|---|---|---|---|---|---|---|---|
| Sandfeuchte | 7 % | | 10 % | | | 10 % | |
| Aerosilaufwand | O | 1 A | O | 1/2 A | 1 A | O | 1 A |
| Keimfähigkeit in % nach 5 Tagen | 88 | 84 | 95 | 91 | 80 | 69 | 67 |
| Trieblänge in cm nach 5 Tagen | 1,8 | 1,9 | 2,5 | 1,9 | 2,0 | 1,9 | 3,4 |

Die eingesetzten synthetischen Kieselsäuren werden wie folgt charakterisiert:

Sipernat 22 LS

|  |  | SIPERNAT 22 LS |
|---|---|---|
| Verhalten gegenüber Wasser |  | -hydrophil |
| Oberfläche nach BET [1] | $m^2/g$ | 190 |
| Mittlere Größe der Agglomerate | μm | 4,5 [9] |
| Stampfdichte [2] | g/l | 80 |
| Trocknungsverlust (2h bei 105 °C) bei Verlassen des Lieferwerkes [3] | % | 6 |
| Glühverlust (2h bei 1000 °C) [4] [10] | % | 5 |
| pH-Wert (in 5 %iger wäßriger Dispersion) [5] |  | 6,3 |
| DBP-Absorption [6] [10] | g/100 g | 270 |
| $SiO_2$ [11] | % | 98 |
| $Na_2O$ [11] | % | 1 |
| $Fe_2O_3$ [11] | % | 0,03 |
| $SO_3$ [11] | % | 0,8 |
| Siebrückstand (nach Mocker, 45 μm) [7] | % | 0,1 |

7

1) nach DIN 66 131

2) nach DIN ISO 787/XI, JIS K 5101/18 (nicht gesiebt)

3) nach DIN ISO 787/II, ASTM D 280, JIS K 5101/21

4) nach DIN 55 921, ASTM D 1208, JIS K 5101/23

5) nach DIN ISO 787/IX, ASTM D 1208, JIS K 5101/24

6) nach DIN 53 601, ASTM D 2414

7) nach DIN ISO 787/XVIII, JIS K 5101/20

9) Coulter Counter, 50 μm Kapillare

10) bezogen auf die 2 Stunden bei 105 °C getrocknete Substanz

11) bezogen auf die 2 Stunden bei 1000 °C geglühte Substanz

| | | Aerosil R 972 | Aerosil 200 |
|---|---|---|---|
| Oberfläche nach BET | $m^2/g$ | 110±20 | 200±25 |
| Mittlere Größe der Primärteilchen | Nanometer | 16 | 12 |
| Stampfdichte 1) | g/l | ca. 50 | ca. 50 |
| Trockungsverlust 2) (2 h bei 105 °C) bei Verlassen des Werkes | % | 0,5 | 1,5 |
| Glühverlust 2) 7) (2 h bei 1000 °C) | % | 2 9) | 1 |
| pH-Wert 3) (in 4%iger wäßriger Dispersion) | | 3,5-4,1 8) | 3,6-4,3 |
| $SiO_2$ 5) | % | 99,8 | 99,8 |
| $Al_2O_3$ | % | 0,05 | 0,05 |
| $Fe_2O_3$ 5) | % | 0,01 | 0,003 |
| $TiO_2$ 5) | % | 0,03 | 0,03 |
| HCl 5) 10) | % | 0,05 | 0,025 |
| Siebrückstand 4) nach Mocker (45 μm) | % | - | 0,05 |

1) nach DIN 53 194
2) nach DIN 55 921
3) nach DIN 53 200
4) nach DIN 53 580
5) bezogen auf die 2 Stunden bei 1000 °C geglühte Substanz.
6) spezielle feuchtigkeitsgeschützte Verpackung.
7) bezogen auf die 2 Stunden bei 105 °C getrocknete Substanz
8) in Wasser: Aceton oder Methanol = 1 : 1
9) enthält ca. 1 % chemisch gebundenen Kohlenstoff
10) HCl-Gehalt ist Bestandteil des Glühverlustes

**Patentansprüche**

**1.** Verfahren zur Verbesserung der Keimfähigkeit und Keimschnelligkeit von Pflanzensamen, dadurch gekennzeichnet, daß man Pflanzensamen mit synthetischer, hydrophiler Kieselsäure, insbesondere mit auf pyrogenem Wege hergestellter Kieselsäure, umhüllt.

**Claims**

1. Process for improving the germinating capacity and germinating speed of plant seeds, characterized in that plant seeds are coated with synthetic hydrophilic silicic acid, especially with silicic acid prepared by a pyrogenic method.

**Revendications**

1. Procédé pour améliorer la faculté germinative et la rapidité de germination de semences de plantes, caractérisé en ce qu'on revêt des semences de plantes d'acide silicique synthétique, hydrophile, en particulier d'acide silicique obtenu par pyrogénation.

# Mais-Feldversuch 1987
## Garant und Gelber Badischer

**Fig. 1**

Kornertrag (KE in dt/ha) und Kornanteil (KA in % der Gesamttrockenmasse) zweier Maissorten unterschiedlicher Reifegruppen ("Garant", FAO 240 und "Gelber Badischer", FAO 290) zu zwei Saatterminen ("früh"= 28.4.,"spät"= 25.5.), Hohenheim 1987.

EP 0 353 431 B1

# Sojabohnen–Feldversuch 1987
## Maple Isle und KW 416

**Fig. 2**

Kornertrag (KE in dt/ha) und Kornanteil (KA in % der Gesamttrockenmasse) zweier Sojabohnensorten unterschiedlichen Reifetyps (früh = "Maple Isle" (MI), spät = "KW 416"(KW)) zu zwei Saatterminen ("früh"= 23.4., "spät" = 25.5.), Hohenheim 1987.